# EUROPÄISCHE PATENTSCHRIFT

(11) **EP 1 435 179 B1**
(45) Veröffentlichungstag und Bekanntmachung des Hinweises auf die Patenterteilung: **23.03.2005**
(21) Anmeldenummer: 02776791.2
(22) Anmeldetag: 02.10.2002
(51) Int. Cl.: H04N 13/00

(54) **FLACHDISPLAY MIT EINER VORGESETZTEN MASKE ZUR RÄUMLICHEN STEREOSKOPISCHEN UND/ODER HOLOGRAFISCHEN DARSTELLUNG VON INFORMATIONEN**
FLAT DISPLAY COMPRISING A FRONTAL MASK FOR THE SPATIAL, STEREOSCOPIC AND/OR HOLOGRAPHIC REPRESENTATION OF INFORMATION
ECRAN PLAT MUNI D'UN MASQUE DISPOSE DEVANT, DESTINE A LA REPRESENTATION SPATIALE STEREOSCOPIQUE ET/OU HOLOGRAPHIQUE D'INFORMATIONS

(30) Priorität: 02.10.2001 DE 10149723
(43) Veröffentlichungstag der Anmeldung: 07.07.2004
(73) Patentinhaber: SeeReal Technologies GmbH, 01307 Dresden (DE)
(72) Erfinder: SCHWERDTNER, Armin, 01259 Dresden (DE)
(74) Vertreter: Uhlemann, Henry, Dipl. Chem.
(86) Internationale Anmeldenummer: PCT/DE2002/003794
(87) Internationale Veröffentlichungsnummer: WO 2003/032648

(56) Entgegenhaltungen:
- EP-A- 0 887 683
- PATENT ABSTRACTS OF JAPAN vol. 2000, no. 26, 1. Juli 2002 (2002-07-01) & JP 2001 264503 A (FUJI PHOTO FILM CO LTD), 26. September 2001 (2001-09-26)
- PATENT ABSTRACTS OF JAPAN vol. 2000, no. 21, 3. August 2001 (2001-08-03) & JP 2001 091707 A (FUJI PHOTO FILM CO LTD), 6. April 2001 (2001-04-06)

## Beschreibung

Die Erfindung betrifft Flachdisplays mit einer vorgesetzten Maske zur räumlichen stereoskopischen und/oder holografischen Darstellung von Informationen

Zur zweidimensionalen und räumlichen stereoskopischen oder holografischen Darstellung von Szenen sind Anordnungen unter anderem durch die EP 0 576 106 A1 (Autostereoskopisches Wiedergabegerät) bekannt.

Unter Verwendung von Flachdisplays werden mit diesen Anordnungen aus zweidimensionalen Darstellungen räumliche Darstellungen erzielt.

Bei stereoskopischen Anordnungen werden die Bilder für das rechte und das linke Auge auf einem Flachdisplay durch optische Masken so auf den Betrachter kanalisiert, dass der Betrachter idealerweise mit dem linken Auge nur das betreffende linke Bild und mit dem rechten Auge nur das rechte Bild sieht. Eine derartige Anordnung ist durch die DE 39 21 061 A1 (Wiedergabeeinrichtung für dreidimensionale Wahrnehmung von Bildern). Dies kann auch durch eine komplexe optische Maske mit linienförmigem oder anderem geeignet strukturierten Beleuchtungsgitter erreicht werden, die sich, vom Betrachter aus gesehen, hinter dem Display befindet. Es können aber auch in Abhängigkeit vom Winkel, unter dem die Anordnung betrachtet wird, mehrere Ansichten einer Szene oder eines Gegenstandes aus entsprechenden Winkeln beobachtet werden (US 5 040 878).

Flachdisplays weisen in der Regel zur Reflexminderung eine Antireflexschicht auf ihrer Oberfläche auf. Diese wird heute üblicherweise nicht mehr in Form sogenannter λ/2 - Schichten sondern durch ein Rauhigkeitsprofil realisiert.

Diese Oberflächenrauhigkeit der Flachdisplays wirkt sich bei den bekannten Anordnungen zur räumlichen stereoskopischen Darstellung dahingehend negativ aus, dass neben der erwünschten Kanalisierung des aus den Displays austretenden Lichtes auf die Augen des oder der Betrachter noch zusätzlich Streulicht entsteht, wodurch die Qualität der stereoskopischen räumlichen Darstellung erheblich beeinträchtigt wird.
Bei den bekannten Anordnungen zur holografischen Darstellung bewirkt die Oberflächenrauhigkeit eine Beeinflussung der Kohärenz des Lichtes, was zu einer deutlichen Qualitätsminderung führt.

Aufgabe der Erfindung ist die Verbesserung der Qualität der räumlichen stereoskopischen oder holografischen Darstellung bei bekannten eine Rauhigkeit der Oberfläche aufweisenden Flachdisplays.

Diese Aufgabe wird mit den im Patentanspruch 1 aufgeführten Merkmalen gelöst.

Die erfindungsgemäßen Flachdisplays zeichnen sich insbesondere dadurch aus, dass die Qualität der räumlichen stereoskopischen oder holografischen Darstellungen bei bekannten eine rauhe Oberfläche aufweisende Flachdisplays durch Glättung der Oberfläche wesentlich verbessert wird.

Dazu ist die durch deren Rauhigkeit entspiegelte Oberfläche des Flachdisplays mit einer immergierendem und/oder transparentem Schicht versehen, oder befindet sich zwischen Oberfläche und Maske ein transparentes oder immergierendes Material. Im letzteren Fall befindet sich das Material in einem luftdicht abgeschlossenem Körper oder der Raum zwischen Flachdisplay und Maske ist abgeschlossen und enthält das transparente oder immergierende Material.

Ein weiterer wesentlicher Vorteil besteht darin, dass die immergierende und/oder transparente Schicht auf der Oberfläche des Flachdisplays gleichzeitig vor mechanischen und/oder Wärme- und/oder Witterungs-Einflüssen schützt. Weiterhin kann diese der Entspiegelung dienen.

Damit eignen sich die erfindungsgemäßen Flachbildschirme vorteilhafterweise für eine störungsanne, räumliche, stereoskopische und/oder holografische Darstellung unter Verwendung von Flachdisplays, deren Oberfläche eine Rauhigkeit aufweisen. Es ergeben sich die vielfältigsten Anwendungen unter anderem in den Bereichen Modellierung, virtuelle Realität (VR), rechnergestütztes Konstruieren (CAD), Multimedia und Spiele.

Vorteilhafte Ausgestaltungen der Erfindung sind in den Patentansprüchen 2 bis 5 angegeben.

Die Weiterbildung nach Patentanspruch 2, wobei der Raum zwischen der Oberfläche des Flachdisplays und der Maske immergierendes Material enthält, führt zu einer einfachen Möglichkeit der Erweiterung vorhandener Flachdisplays mit der Maske.

Ein dichter Raum zwischen der Oberfläche des Flachdisplays und der Maske mit einem immergierendem oder transparentem Material nach der Weiterbildung des Patentanspruchs 3 führt zu einem kompakten Flachdisplay zur räumlichen stereoskopischen und/oder holografischen Darstellung.

Mit der Weiterbildung des Patentanspruchs 4, wobei die Maske gegenüber dem Flachdisplay verschiebbar angeordnet ist, kann der Betrachter der stereoskopischen oder holografischen Darstellung auch seine Position ändern, ohne dass sich die Bildwiedergabequalität für diesen Betrachter verschlechtert. Dabei wird vorteilhafterweise die Maske entsprechend der neuen Position des Betrachters nachgeführt. Das geschieht durch eine Positionsbestimmung des Betrachters, wobei die Maske über einen damit gekoppelten Antrieb dementsprechend nachgerührt wird.

Mit wenigstens einer λ/2 - Schicht nach der Weiterbildung des Patentanspruchs 5 erfolgt vorteilhafterweise eine Entspiegelung der erfindungsgemäßen Flachdisplays.

Ausführungsbeispiele der Erfindung sind in den Zeichnungen dargestellt und werden im folgenden näher beschrieben.

Es zeigen jeweils in einer Draufsicht:
Fig. 1 eine prinzipielle Darstellung eines Flachdisplays mit dem Entstehen von Streulicht durch die Rauhigkeit der Oberfläche des Flachdisplays,
Fig. 2 eine prinzipielle Darstellung eines Flachdisplays mit einer Möglichkeit der Unterdrückung des Streulichtes durch ein immergierendes Material,
Fig. 3 eine prinzipielle Darstellung eines Flachdisplays mit einer zusätzlichen transparenten Schicht,
Fig. 4 eine prinzipielle Darstellung eines Flachdisplays mit einer zusätzlichen Entspiegelung durch eine λ/2-Schicht,
Fig. 5 eine prinzipielle Darstellung eines Flachdisplays mit einem Material zur Immersion zwischen der Oberfläche des Flachdisplays und einer Maske zur stereoskopischen Darstellung,
wobei die Buchstaben P die Pixelspalten in den Flachdisplays bezeichnen und diese entweder selbstleuchtend oder mit Hintergrundbeleuchtung versehen sein.

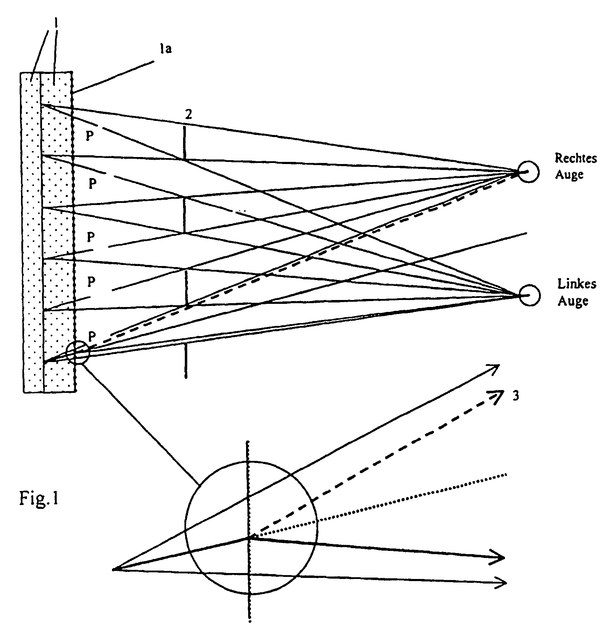

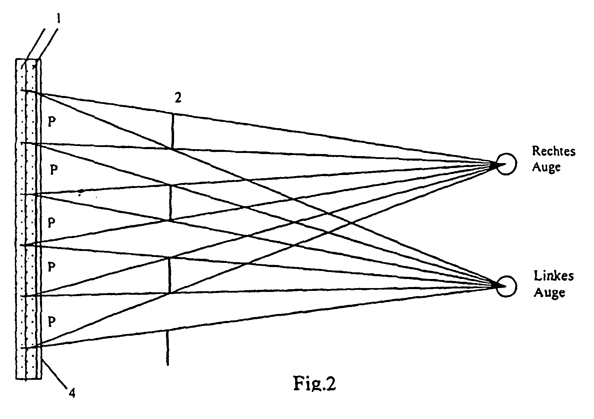

Ein Flachdisplay mit einer vorgesetzten Maske zur räumlichen stereoskopischen und/oder holografischen Darstellung von Informationen besteht in einem ersten Ausführungsbeispiel prinzipiell aus einem bekannten Flachdisplay, dessen Oberfläche mit einer immergierenden Schicht versehen ist (Darstellung in der Fig. 2). Zur näheren Erklärung zeigt die Fig. 1 eine bekannte Anordnung zur räumlichen stereoskopischen Darstellung. Dem Flachdisplay 1 mit den Pixelspalten P ist eine Maske 2 zum Betrachter hin vorgeordnet, die idealerweise eine Kanalisierung von zwei Ansichten auf die Augen der/des Betrachter/s bewirkt. An der Oberfläche des Flachdisplays la entsteht Streulicht 3 , das als parasitäres Licht in das jeweils andere Auge der/des Betrachter/s fällt. Statt des beabsichtigten Stereo-Eindruckes erhält der Betrachter als Störung zusätzlich die in der Tiefe invertierte Darstellung.

Die Fig. 2 zeigt ein Flachdisplay 1 mit einer immergierenden Schicht 4 auf dessen Oberfläche, die die Rauhigkeit der Oberfläche einebnet. Mit dem Streulicht wird die invertierte Stereo-Darstellung unterdrückt.

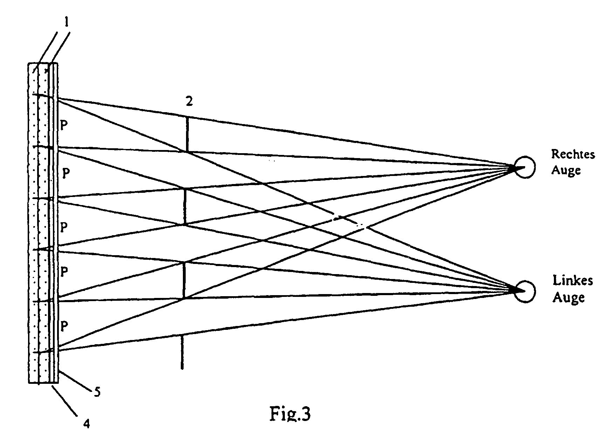

In einer Ausführungsform des ersten Ausführungsbeispiels kann zusätzlich eine transparente Schicht 5 aufgebracht sein, die dem Oberflächenschutz dient (Darstellung in der Fig. 3).

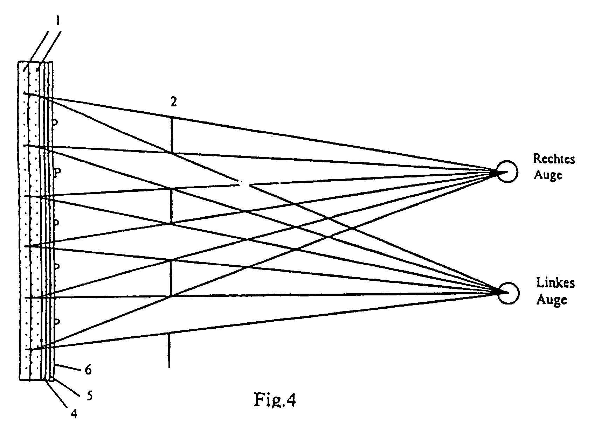

In einer weiteren Ausführungsform des Ausführungsbeispiels entsprechend der Darstellung in der Fig. 4 kann das Flachdisplay 1 entsprechend der Darstellung in der Fig. 3 mit einer weiteren zusätzlichen transparenten Schicht 6 als Entspiegelungsschicht 6 versehen sein. Die zusätzliche Entspiegelung unterdrückt Reflexionen, die durch die geglättete Oberfläche entstehen würden. Gleichzeitig kann diese Schicht auch dem Oberflächenschutz dienen.

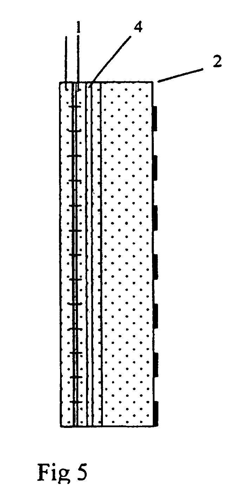

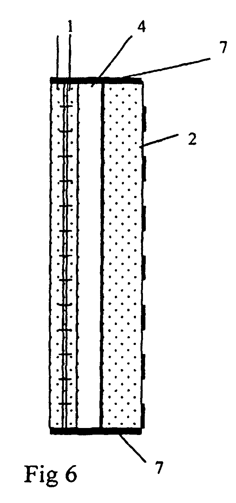

Ein Flachdisplay 1 mit einer vorgesetzten Maske 2 zur räumlichen stereoskopischen und/oder holografischen Darstellung von Informationen besteht in einem zweitem Ausführungsbeispiel prinzipiell aus einem bekannten Flachdisplay 1 mit einer vorgesetzten Maske 2. Zwischen dem Flachdisplay 1 und der Maske 2 für die stereoskopische Darstellung befindet sich die immergierende Schicht 4, die die Oberflächenrauhigkeit optisch unterdrückt (Darstellung in der Fig. 5). Dabei entsteht der gleiche Effekt analog dem ersten Ausführungsbeispiel, wobei die Störung in Form der in der Tiefe invertierten Darstellung für den Betrachter unterdrückt wird. Die immergierende Schicht besteht vorteilhafterweise aus elastischem oder flüssigem Material, wie Immersionsöl, um gleichzeitig die Beweglichkeit der Maske bei getrackten Stereodisplays und anderen Anordnungen zu erhalten.

In einer Ausführungsform des zweiten Ausführungsbeispiels kann sich in einem abgeschlossenem Raum ähnlich einer Schicht 4 zwischen dem Flachdisplay 1 und der Maske 2 ein immergierendes Material befinden. Dieses Material kann durch eine Versiegelung eingeschlossen sein, oder sich in einem abgeschlossenem Körper aus einem flexiblen und transparenten Kunststoff oder Glas befinden.

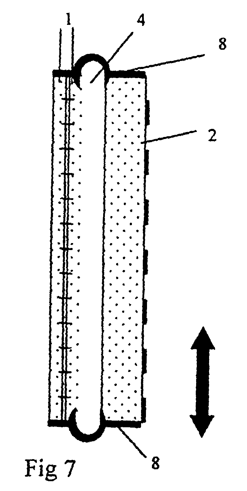

Der grundsätzliche Aufbau eines Flachdisplays 1 mit einer vorgesetzten Maske 2 zur räumlichen stereoskopischen und/oder holografischen Darstellung von Informationen eines dritten Ausführungsbeispiels entspricht im Wesentlichen denen des ersten oder zweiten Ausführungsbeispiels. Die Maske 2 ist durch die immergierende Schicht 4 und eine flexible Versiegelung 8 verschiebbar angeordnet (Darstellung in der Fig. 7). Dadurch kann die Maske 2 entsprechend der Betrachterposition nachgeführt werden, wie dies bei getrackten autostereoskopischen Anordnungen erforderlich ist.

## Patentansprüche

1. Flachdisplay mit einer vorgesetzten Maske zur räumlichen stereoskopischen und/oder holografischen Darstellung von Informationen, **dadurch gekennzeichnet, dass** die rauhe Oberfläche des Flachdisplays (1) mit einer immergierendem Schicht (4) und/oder mit einer transparenten Schicht (5) versehen ist oder dass sich zwischen der Oberfläche des Flachdisplays (1) und der Maske (2) ein transparentes und/oder immergierendes Material befindet, wobei die Schicht oder das Material die Oberflächerauhigkeit optisch unterdrückt.

2. Flachdisplay nach Patentanspruch 1, **dadurch gekennzeichnet, dass** sich im Raum zwischen der Oberfläche des Flachdisplays (1) und der zur stereoskopischen Darstellung vorgesetzten Maske (2) ein in sich abgeschlossener und aus einem transparenten Material bestehender Körper mit einem immergierendem Material befindet.

3. Flachdisplay nach Patentanspruch 1, **dadurch gekennzeichnet, dass** der ein immergierendes Material enthaltende Raum zwischen Flachdisplay (1) und vorgesetzter Maske (2) verschlossen ist.

4. Flachdisplay nach den Patentansprüchen 1 bis 3, **dadurch gekennzeichnet, dass** die Maske (2) gegenüber der Oberfläche des Flachdisplays (1) verschiebbar angeordnet ist.

5. Flachdisplay nach den Patentansprüchen 1 bis 4, **dadurch gekennzeichnet, dass** die immergierende und/oder transparente Schicht und/oder die Maske (2) mit wenigstens einer λ/2 - Schicht entspiegelt ist.

## Claims

1. Flat display comprising a frontal mask for the spatial, stereoscopic and/or holographic representation of information,
**characterised in that**,
the rough surface of the flat display (1) is provided with an immerging layer (4) and/or transparent layer (5) or that a transparent and/or immerging material is situated between the surface of the flat display and the mask.

2. Flat display according to claim 1
**characterised in that**
in the space between the surface of the flat display (1) and the frontal mask (2) for stereoscopic representation purposes, a self-contained compound is situated consisting of transparent material with an immerging material.

3. Flat display according to claim 1,
**characterised in that**
the space containing immerging material located between flat display (1) and the frontal mask (2) is locked.

4. Flat display according to claims 1 to 3
**characterised in that**
the mask (2) is arranged relocatably opposite to the surface of the flat display (1).

5. Flat display according to claims 1 to 4
**characterised in that**
the immerging and/or transparent layer and/or mask is bloomed with a layer of at least λ/2.

## Revendications

1. Ecran plat muni d' une masque disposée devant destiné à la représentation spatiale stéréoscopique et/ou holographique d'informations
**caractérisée en ce que**
la surface râpeuse de l'écran (1) plat est équipée d'une couche immergée (4) et/ou une couche transparente (5) ou qu'il y a du matériel transparent et/ou immergeant entre la surface de l'écran (1) plat et la masque (2).

2. Ecran plat selon revendication 1
**caractérisée en ce que**
dans l'espace entre la surface de l'écran plat (1) et la masque avancée (2) pour la représentation stéréoscopique se trouve un corps fini en soi et consistant du matériel transparent avec du matériel immergeant.

3. Ecran plat selon revendication 1
**caractérisée en ce que**
l'espace entre l'écran plat (1) et masque avancée (2) contenant du matériel immergeant est renfermé.

4. Ecran plat selon les revendications 1 à 3
**caractérisée en ce que**
la masque (2) est déplaçable comparée à la surface de l'écran plat (1).

5. Ecran plat selon les revendications 1 à 4
**caractérisée en ce que**
la couche immergée et/ou transparente et/ou la masque (2) sont démiroitées avec une couche d'au moins λ/2.
